# EUROPÄISCHE PATENTANMELDUNG

(11) **EP 0 874 215 A2**
(43) Veröffentlichungstag der Anmeldung: **28.10.1998**
(21) Anmeldenummer: 98104535.4
(22) Anmeldetag: 13.03.1998
(51) Int. Cl.: G01B 9/02

(54) **Verfahren und Vorrichtung zur optischen Messung von Längen und Entfernungen**

(30) Priorität: 24.04.1997 DE 19717203
(71) Anmelder: Technomess Qualitätssicherungs- Systeme Gesellschaft mbH, 71720 Oberstenfeld (DE)
(72) Erfinder: Raff, Helmut, 71717 Beilstein (DE)

(57) **Zusammenfassung**

Um die beispielsweise aufgrund von Temperaturänderungen bzw. -schwankungen auftretenden Längenänderungen einer Meßeinrichtung (20) bei der optischen Messung von Längen und Entfernungen zu berücksichtigen, wird ein Meßverfahren und eine Vorrichtung zur Durchführung dieses Verfahrens vorgeschlagen, bei denen gegenüber den vorbekannten Verfahren bzw. Vorrichtungen der Referenzstrahl (7) eines Interferometersystems wie der Meßstrahl (6) aus dem Meßkopf (2) herausgeführt und an einem Reflektor (12) reflektiert wird.

## Beschreibung

Die Erfindung betrifft ein Verfahren zur optischen Messung von Längen und Entfernungen nach dem Oberbegriff von Patentanspruch 1 und eine Vorrichtung zur Durchführung dieses Verfahrens nach dem Oberbegriff von Patentanspruch 6.

Zur Längen- und Entfernungsmessung werden häufig Interferometer eingesetzt, wobei der Verschiebeweg eines Meßreflektors interferometrisch erfaßt wird. Durch Bewegen des Meßreflektors relativ zum Interferometerkopf verändert sich das von einer Detektoreinrichtung erfaßte optische Interferenzsignal. Aus der bekannten Wellenlänge des Lichts kann die Bewegung des Meßreflektors quantitativ bestimmt werden. In der Praxis wird als Lichtquelle üblicherweise eine Laserlichtquelle, zumeist ein Helium-Neon-Gaslaser (HeNe-Laser) verwendet.

Das Prinzip der Interferometrie ist bereits seit geraumer Zeit aus der Fachliteratur bekannt. In Figur 4 ist ein Laserinterferometersystem gezeigt, wie es beispielsweise in einer Meßeinrichtung gemäß der europäischen Patentanmeldung EP 0 635 697 A2 der Anmelderin verwendet wird. Die Druckschrift offenbart eine Meßeinrichtung für laserunterstütze Längen- und Entfernungsmessungen von Meßobjekten, wie beispielsweise Prüfmitteln. Das Meßsystem besteht im wesentlichen aus einer Laserlichtquelle 1, einem Interferometer-Meßkopf 2, einer Detektoreinrichtung 3 und einem Meßreflektor 8. Im Meßkopf 2 befindet sich ein Strahlteiler 4, der den von der Laserlichtquelle 1 kommenden Laserlichtstrahl 5 in einen Meßstrahl 6 und einen Refernzstrahl 7 teilt. Der Meßstrahl 6 wird durch eine Lichtaustrittsöffnung 15 aus dem Meßkopf herausgeführt, an dem beweglich angebrachten Meßreflektor 8 reflektiert und durch eine Lichteintrittsöffnung 16 vom Meßkopf wieder empfangen. An einer in dem Interferometer-Meßkopf 2 angeordneten Rekombinationseinrichtung 9 rekombinieren der reflektierte Meßstrahl 6.1 und der Referenzstrahl 7 unter Bildung eines Interferenzstrahles 10. Dieses so erzeugte optische Interferenzsignal 10 wird der Detektoreinrichtung 3 zugeführt und von dieser elektronisch ausgewertet. Der Interferometer-Meßkopf 2 ist dabei erfindungsgemäß auswechselbar in einer Meß- oder Prüfeinrichtung einsetzbar.

Ein weiteres Laserinterferometersystem ist beispielsweise aus der deutschen Offenlegungsschrift DE 43 13 076 A1 bekannt. Zur Ermittlung des Verschiebeweges und der Bewegungsrichtung eines beweglich angebrachten Meßreflektors wird das optische Interferenzsignal aus dem reflektierten Meßstrahl und dem Referenzstrahl mittels geeigneter optischer Elemente in vier jeweils um 90° gegeneinander phasenverschobene Interferenzsignale aufgespalten. Zusätzlich ist im Strahlengang des Meßstrahles ein wahlweise einsetzbarer Strahlunterbrecher angeordnet, um die Photodetektoren für die Interferenzsignale vor Beginn der eigentlichen Messung nur mit dem Licht des Referenzstrahles autokalibrieren zu können.

Ferner offenbart die internationale Patentanmeldung PCT/GB88/ 00821 ein Laserinterferometersystem für Koordinatenmeßmaschinen. Mittels eines Laserinterferometers kann hier die Verschiebung einer bewegbaren Spindel relativ zur Meßmaschine bestimmt werden. Die optischen Bauteile, insbesondere Laserinterferometerkopf und Reflektor, sind dabei derart konstruiert, daß sie mit geringem Aufwand und ohne zusätzliche Maßnahmen wahlweise entweder an der bewegbaren Spindel oder ortsfest an der Meßmaschine angebracht werden können.

Allen vorgenannten Laserinterferometersystemen ist gemeinsam, daß die mit ihnen mittels einer Meßeinrichtung durchgeführten Längen- und Entfernungsmessungen bei Längenänderungen der Meß-einrichtung, insbesondere aufgrund von Temperaturänderungen bzw. -schwankungen, je nach Ausmaß der Änderungen nicht unerhebliche Meßfehler beinhalten können.

Es ist deshalb eine Aufgabe der vorliegenden Erfindung, ein Meßverfahren sowie eine Vorrichtung zur optischen Messung von Langen und Entfernungen vorzuschlagen, welche die beispielsweise bei Temperaturänderungen bzw. -schwankungen auftretenden Längenänderungen der Meßeinrichtung berücksichtigt und möglicherweise auftretende Meßfehler vermindert.

Erfindungsgemäß wird diese Aufgabe durch ein Meßverfahren mit den Merkmalen von Patentanspruch 1 und durch eine Vorrichtung mit den Merkmalen von Patentanspruch 6 gelöst. Erfinderische Ausgestaltungen und Weiterbildungen sind den Unteransprüchen zu entnehmen.

Dadurch daß neben dem Meßstrahl auch der Referenzstrahl aus dem Meßkopf herausgeführt und an einem ortsfesten Referenzreflektor reflektiert wird, wird die Bewegung des beweglichen Meßreflektors nicht wie bisher relativ zum Meßkopf sondern relativ zum Referenzreflektor erfaßt. Um die Längenänderungen der Meßeinrichtung im Bereich zwischen Meßkopf und Meßreflektor bei der Messung zu berücksichtigen, muß der Strahlengang des Referenzstrahles parallel und gleichgerichtet zum Strahlengang des Meßstrahles orientiert sein. Bei dem erfindungsgemäßen Verfahren bzw. der erfindungsgemäßen Vorrichtung spielen nurmehr Längenänderungen der Meßeinrichtung im Bereich zwischen dem beweglichen Meßreflektor und dem ortsfesten Referenzreflektor eine Rolle, weshalb der Refernzreflektor möglichst nahe an einem Referenzpunkt der Messung angebracht werden sollte. Ein solcher Referenzpunkt kann beispielsweise durch die Nullpunksstellung der Messung gegeben sein.

Ein Ausführungsbeispiel der Erfindung wird im folgenden anhand der beiliegenden Zeichnung näher erläutert. Darin zeigen.
- Figur 1: die erfindungsgemäße Vorrichtung in einer schematischen Darstellung;
- Figur 2: ein Anwendungsbeispiel der erfindungsgemäßen Vorrichtung in einer Meßeinrichtung;
- Figur 3: ein weiteres Anwendungsbeispiel der erfindungsgemäßen Vorrichtung in einer Meßeinrichtung; und
- Figur 4: ein Interferometersystem, wie es aus dem Stand der Technik bekannt ist, in einer schematischen Darstellung.

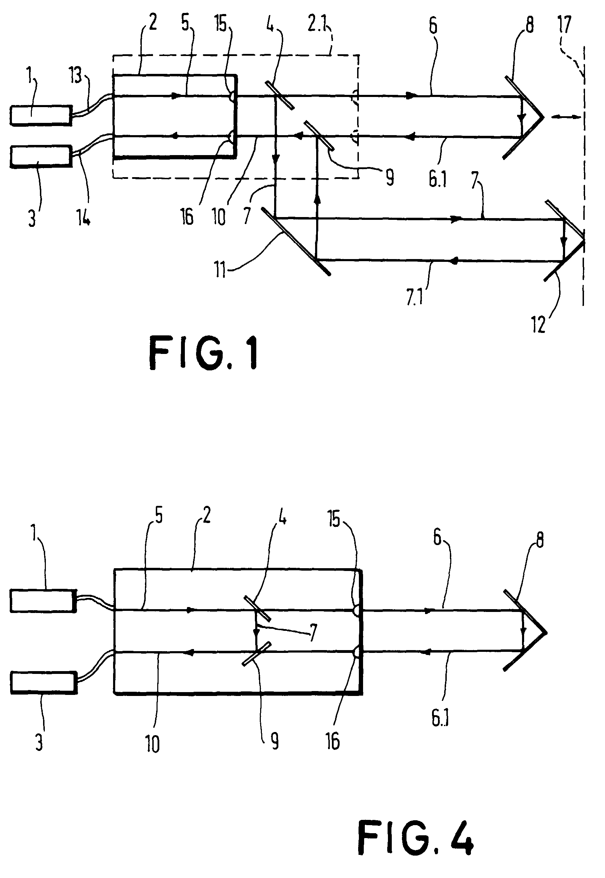

Anhand von Figur 1 werden zunächst das erfindungsgemäße Verfahren und die erfindungsgemäße Vorrichtung schematisch dargestellt; dabei werden der Einfachheit halber für gleiche Elemente des verwendeten Interferometersystems die gleichen Bezugszeichen verwendet wie beim vorbekannten Interferometersystem gemäß Figur 4. Das erfindungsgemäße Interferometersystem enthält neben den in der Zeichnung dargestellten Elementen selbstverständlich noch weitere optische Elemente, wie beispielsweise verschiedene Linsen oder Linsenanordnungen und spezielle Lichtleitungen. Da diese Elemente jedoch nicht erfindungswesentlich sind und anderereseits dem Fachmann aus vorbekannten Innterferometersystemen hinlängliich bekannt sind, wurde auf ihre Darstellung und Beschreibung im Rahmen dieser Anmeldung verzichtet.

Der als Sende- und Empfangseinheit dienende Meßkopf 2 erhält von einer Laserlichtquelle 1 über eine geeignete Lichtleitungsverbindung 13 einen Laserstrahl 5. Bei der Laserlichtquelle 1 handelt es sich beispielsweise um einen herkömmlichen HeNe-Laser. Der Laserlichtstrahl 5 verläßt den Meßkopf 2 durch eine Lichtaustrittsöffnung 15, wobei er geradlinig in Richtung auf einen beweglich angebrachten Meßreflektor 8 ausgerichtet ist. Außerhalb des Meßkopfes 2 wird der Lichtstrahl 5 mittels eines Strahlteilers 4 in einen Meßstrahl 6 und einen Refernzstrahl 7 geteilt.

Der Meßstrahl 6 läuft in gleicher Richtung weiter wie der ursprüngliche Lichtstrahl 5 und trifft nach einer gewissen Laufzeit auf den Meßreflektor 8. Der Meßreflektor 8 ist derart konstruiert, daß der an ihm reflektierte Meßstrahl 6.1 wieder in Richtung auf den Meßkopf 2 zurück läuft, wobei der reflektierte Meßstrahl 6.1 parallel und örtlich beabstandet zum Meßstrahl 6 verläuft. Der Meßreflektor 8 wird beispielsweise durch zwei Reflektoren gebildet die einen Winkel von 90° einschließen und jeweils 45° gegen die Richtung des Meßstrahles 6 bzw. des reflektierten Meßstrahles 6.1 geneigt sind. Bekannt ist beispielsweise auch die Verwendung eines sogenanntes Triple-Prismas als Reflektor 8 mit den gewünschten Eigenschaften. Bevor der reflektierte Meßstrahl 6.1 vom Meßkopf 2 durch eine Lichteintrittsöffnung 16 empfangen wird, trifft er auf eine als Strahlteiler ausgebildete Rekombinationseinrichtung 9, durch die er in gleichbleibender Richtung hindurch zum Meßkopf 2 weiterläuft.

Der Referenzstrahl 7 läuft vom Strahlteiler 4 aus senkrecht zum ursprünglichen Lichtstrahl 5 und zum Meßstrahl 6 in Richtung auf eine Umlenkeinrichtung 11 weiter. Diese Umlenkeinrichtung 11, beispielsweise ein um 45° gegen die Laufrichtung des Referenzstrahles 7 geneigter Reflektor oder ein entsprechendes Prisma, lenkt den Referenzstrahl 7 um 90° um, so daß sein Strahlengang schließlich parallel und gleichgerichtet zu dem des Meßstrahles 6 orientiert ist. In einer gewissen Entfernung trifft der Referenzstrahl 7 auf einen ortsfest angebrachten Referenzreflektor 12.

Dieser Referenzreflektor 12 ist im Prinzip genauso wie der Meßreflektor 8 aufgebaut, also beispielsweise als Triple-Prisma, und reflektiert den Refernzstrahl 7 wieder in Richtung auf die Umlenkeinrichtung 11 zurück, wobei der reflektierte Referenzstrahl 7.1 parallel und örtlich beabstandet zum Referenzstrahl 7 verläuft. Der reflektierte Referenzstrahl 7.1 trifft nun wieder auf die Umlenkeinrichtung 11, wo er um 90° in Richtung auf die Rekombinationseinrichtung 9 umgelenkt wird. Die Umlenkeinrichtung 11 ist dabei vorzugsweise so bemessen und positioniert, daß sie sowohl den vom Strahlteiler 4 kommenden Referenzstrahl 7 als auch den vom Referenzreflektor 12 kommenden reflektierten Referenzstrahl 7.1 umlenkt, es können aber ebenso zwei getrennte Umlenkeinrichtungen verwendet werden.

An der Rekombinationseinrichtung 9 wird der umgelenkte reflektierte Refernzstrahl 7.1 nochmals um 90° in die gleiche Richtung wie der reflektierte Meßstrahl 6.1 umgelenkt. Die Anordnung der optischen Elemente ist dabei so gewählt, daß der reflektierte Meßstrahl 6.1 und der reflektierte Referenzstrahl 7.1 die Rekombinationseinrichtung 9 an der gleichen Koordinate treffen, so daß sie zu einem gemeinsamen Interferenzstrahl 10 rekombinieren können.

Der Interferenzstrahl 10 wird vom Meßkopf 2 durch die Lichteintrittsöffnung 16 empfangen und über eine geeignete Lichtleitungsverbindung 14 einer Detektoreinrichtung 3 zugeführt. Die Detektoreinrichtung 3 erfaßt das optische Interferenzsignal 10 aus reflektiertem Meßstrahl 6.1 und reflektiertem Referenzstrahl 7.1 und wertet es elektronisch aus. Die Ergebnisse der Answertung können vorteilhafterweise über eine graphische Anzeigeeinheit oder ein Display angezeigt oder über einen Drucker ausgedruckt werden.

Da der Referenzstrahl 7 wie der Meßstrahl 6 außerhalb des Meßkopfes 2 an einem Reflektor reflektiert wird, wird die Bewegung des Meßreflektors 8 nicht wie bei den vorbekannten Meßsystemen relativ zum Meßkopf 2, sondern relativ zum ortsfest angebrachten Referenzreflektor 12 erfaßt. Besonders vorteilhaft ist es, wenn der Referenzreflektor 12 möglichst nahe oder genau in Höhe eines Referenzpunktes 17 der Messung angebracht ist. Ein solcher Referenzpunkt 17 ist beispielsweise durch die Nullpunktsstellung der Längen- oder Entfernungsmessung gegeben.

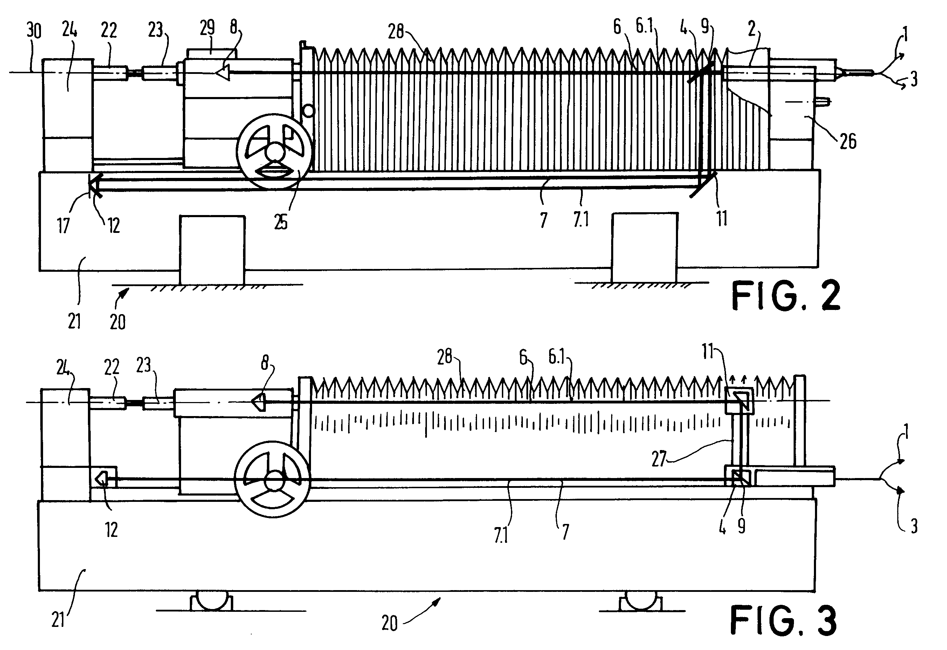

Durch diese Maßnahme wirken sich Längenänderungen der Meßeinrichtung, insbesondere aufgrund von Temperaturänderungen oder -schwankungen, im relativ großen Bereich zwischen Meßkopf 2 und Meßreflektor 8 nicht auf das Meßergebnis aus. Die Bauteile der Meßeinrichtung, wie sie beispielsweise weiter unten anhand der Figuren 2 und 3 noch näher beschrieben wird, im Bereich zwischen ortsfestem Referenzreflektor 12 und beweglichem Meßreflektor 8, insbesondere der Abstandshalter 27 sollten aus einem möglichst temperaturunempfindlichen Material gefertigt sein, um die Fehlerquellen auch in diesem noch verbleibendem Bereich zu vermindern.

In Figur 1 sind Strahlteiler 4, Umlenkeinrichtung 11 und Rekombinationseinrichtung 9 außerhalb des Meßkopfes 2 angeordnet, sie können aber alle oder zumindest zum Teil ebenso innerhalb des Meßkopfes 2 untergebracht werden. Eine solche Variante ist in Figur 1 durch den gestrichelt dargestellten Meßkopf 2.1 angedeutet. Anstelle der nur einen Lichtaustrittsöffnung 15 und der nur einen Lichteintrittsöffnung 16 für den Laserlichtstrahl 5 bzw. den Interferenzstrahl 10 werden in diesem Fall insgesamt zwei Lichtaustrittsöffnungen 15 und zwei Lichteintrittsöffnun-gen 16 für den Meßstrahl 6, 6.1 und den Referenzstrahl 7, 7.1 benötigt. Entscheidend für die Funktion des erfindungsgemäßen Meßverfahrens bzw. der erfindungsgemäßen Vorrichtung ist nur, daß der Referenzstrahl 7 an einem außerhalb des Meßkopfes 2 ortsfest angebrachten Referenzreflektor 12 reflektiert wird.

Ferner ist es auch möglich, Strahlteiler 4 und Rekombinationseinrichtung 9 als ein einziges Bauteil zu konstruieren und zu verwenden, ähnlich wie die gemeinsame Umlenkeinrichtung 11 für den Referenzstrahl 7 und den reflektierten Referenzstrahl 7.1.

Außerdem sei an dieser Stelle darauf hingewiesen, daß in sämtlichen Figuren 1 bis 4 die Anordnung des Interferometersystems nicht maßstabsgetreu dargestellt ist. Im allgemeinen ist der Abstand der Reflektoren 8 und 12 vom Meßkopf 2 bzw. 2.1 im Verhältnis weich größer als die Bauteile des Systems, und die Abstände der Lichtstrahlen 6, 7 zu den reflektierten Lichtstrahlen 6.1, 7.1 sind im Verhältnis wesentlich kleiner als die Elemente des Systems.

Ein Anwendungsbeispiel für die oben beschriebene Vorrichtung zeigt Figur 2 mit bewußt nicht exakt übereinstimmender Länge von Meßstrahl und Referenzstrahl. Eine solche Übereinstimmung entspricht dem Idealfall und ist in Figur 3 dargestellt. Grundsätzlich wird aber auch in Figur 2 von der Erfindung Gebrauch gemacht und aufgezeigt, daß auch leicht verschlechterte Randbedingungen noch zu brauchbaren, guten Meßergebnissen führen.

Die Meßeinrichtung 20 entspricht grundsätzlich der in der EP 0 635 697 A2 beschriebenen Meßeinrichtung für Längen- und Entfernungsmessungen; für eine nähere Beschreibung wird deshalb an dieser Stelle vollinhaltlich auf diese Druckschrift verwiesen.

Die dargestellte Meßeinrichtung 20 eignet sich insbesondere für Einkoordinaten-Messungen wie Längen- und Entfernungsmessungen. Die Meßeinrichtung 20 ist auf einem Grundgestell 21, beispielsweise aus Granit, montiert. Die wesentlichen Bestandteile der Meßeinrichtung 20 sind ein ortsfest angebrachter erster Meßtaster 22, ein beweglich angebrachter zweiter Meßtaster 23 und ein vorzugsweise auswechselbar angebrachter Meßkopf 2.

Der erste Meßtaster 22 ist an einer ortsfest montierten Haltevorrichtung 24 befestigt und exakt entlang der im allgemeinen horizontal verlaufenden Meßachse 30 der Meßeinrichtung 20 aus-gerichtet; er dient als Anlagepunkt für ein (nicht gezeigtes) Meßobjekt. In einem veränderbaren Abstand zu diesem ortsfesten Meßtaster 22 befindet sich der zweite Meßtaster 23, der ebenfalls exakt entlang der im allgemeinen horizontalen Meßachse 30 ausgerichtet ist, so daß dessen Längsachse mit der Längsachse des ersten Meßtasters 22 fluchtet.

Zwischen den beiden Meßtastern 22 und 23 wird ein (nicht gezeigter) Meßtisch plaziert, auf dem sich das Meßobjekt befindet. Der Meßtisch ist sowohl in Richtung der Meßachse 30 als auch in der Höhe verstellbar, um so ein genaues und individuelles Positionieren des Meßobjektes zwischen den Meßtastern 22 und 23 zu ermöglichen.

Die Verschiebung des Meßtasters 23 erfolgt mittels eines durch Spindelantrieb auf dem Grundgestell parallel zur Meßachse 30 bewegbaren Meßschlittens 29, der manuell durch ein Handrad 25 oder auch motorisch verstellt werden kann. Mit dem Meßschlitten 29 wird der daran befestigte zweite Meßtaster 23 mit einer voreinstellbaren konstanten Meßkraft gegen das Meßobjekt gefahren, um sodann den Abstand zwischen den beiden Meßtastern 22 und 23 und damit die Länge des Meßobjektes entlang der Meßachse 30 zu bestimmen.

An dem dem ortsfesten Meßtaster 22 abgewandten Stirnende des Grundgestells 21 ist ein Träger 26 für den auswechselbaren Meßkopf 2 ortsfest montiert. Die Anbringung des Meßkopfes 2 erfolgt dabei derart, daß die Lichtaustrittsöffnung 15 für den Laserlichtstrahl 5 und die Lichteintrittsöffnung 16 für den Interferenzstrahl 10 so positioniert und ausgerichtet sind, daß der Laserlichtstrahl 5 und der Meßstrahl 6 exakt entlang der Meßachse 30 verläuft. Alternativ würde jedoch auch eine Strahlführung parallel zur Meßachse 30 genügen.

Der Meßstrahl trifft präzise auf einen als Triple-Prisma ausgebildeten Meßreflektor 8, der an einer dem Meßobjekt abgewandten Stirnfläche des beweglichen Meßtasters 23 oder des Meßschlittens 29 angebracht ist. Eine Anbringung des Meßreflektors 8 möglichst nahe an der Meßspitze des Meßtasters 23 ist zu bevorzugen, der Meßschlitten 29 kann zu diesem Zweck beispielsweise eine Bohrung entlang der Meßachse 30 enthalten, in die das Triple-Prisma 8 eingesetzt wird.

Zum Schutz für die Bedienungsperson und zur Gewährleistung einer möglichst störungsfreien Messung ist der Strahlengang des Meßstrahles 6, 6.1 zwischen dem Meßkopf 2 und dem Meßreflektor 8 am Meßschlitten 29 weitgehend durch einen Faltenbalg 28 abgedeckt. Durch diese Maßnahme wird erreicht, daß in den Meßstrahl 6 und den reflektierten Meßstrahl 6.1 im Regelfall nicht eingegriffen werden kann.

Die ideale Strahlführung des Referenzstrahles 7, 7.1 wär - wie die des Meßstrahles 6, 6.1 - genau entlang der Meßachse 30. Dies ist jedoch, zumindest in der in Figur 2 dargestellten Konstellation, nicht möglich, da sich in der Meßachse 30 zwischen den beiden Meßtastern 22 und 23 das Meßobjekt befindet. Deshalb muß der Referenzstrahl 7 mittels der optischen Elemente Strahlteiler 4 und Umlenkeinrichtung 11 entlang der Maschinenführung parallel zur Meßachse 30 geführt werden. Dies kann prinzipiell sowohl oben, unten als auch seitlich an der Meßeinrichtung 20 geschehen.

Der Referenzreflektor 12 wird möglichst genau oder nahe in Höhe eines Referenzpunktes 17 der Messung ortsfest an der Meßeinrichtung 20 angebracht. Im Beispiel von Figur 3 ist der Referenzreflektor 12 in Höhe der Haltevorrichtung 24 des ortsfesten Meßtasters 22 befestigt. Weitere Möglichkeiten sind beispielsweise in Höhe des beweglichen Meßreflektors 8 in seiner Ausgangsstellung, wie sie auch in Figur 2 dargestellt ist, oder in dem Bereich zwischen den beiden genannten Alternativen. Diese Positioniermöglichkeiten führen allesamt zum gleichen Ergebnis, nämlich daß Längenänderungen der Meßeinrichtung 20 im Bereich zwischen Meßreflektor 8 und Meßkopf 2 bei Längen- und Entfernungsmessungen an einem Meßobjekt keine Rolle spielen. Da die Bauelemente der Meßeinrichtung 20 im Bereich zwischen Meßreflektor 8 und Referenzreflektor 12, d.h. insbesondere die beiden Meßtaster 22 und 23 sowie die ortsfeste Haltevorrichtung 24 und der Meßschlitten 29, im allgemeinen aus sehr temperaturbeständigem bzw. -unempfindlichen Material sind, beeinflussen Temperaturschwankungen in diesem Bereich die Messung ebenfalls nicht.

Wie der Meßstrahl 6, 6.1, so wird auch der Referenzstrahl 7, 7.1 vorzugsweise zum Schutz für die Bedienungsperson und zur Gewährleistung einer möglichst störungsfreien Messung im Bereich zwischen dem Meßkopf 2 und dem Referenzreflektor 12 weitgehend abgedeckt, so daß in den Referenzstrahl 7 und den reflektierten Referenzstrahl 7.1 im Regelfall nicht eingegriffen werden kann.

Ein weiteres Anwendungsbeispiel für die erfindungsgemäße Vorrichtung bzw. das erfindungsgemäße Meßverfahren ist in Figur 3 dargestellt. Das oben beschriebene Interferometersystem wird ebenfalls an einer Einkoordinaten-Meßeinrichtung 20 eingesetzt, die im wesentlichen der Meßeinrichtung von Figur 2 bzw. der Meßeinrichtung der EP 0 635 697 A2 entspricht.

Im Unterschied zum oben beschriebenen Aufbau des ersten Anwendungsbeispieles ist hier der Meßkopf 2 nicht auf der Meßachse 30 der Meßeinrichtung 20 angeordnet, sondern unterhalb davon. Der Meßkopf 2 befindet sich unmittelbar oder nahezu unmittelbar auf dem Grundgestell 21 aus Granit.

Im Gegensatz zum Aufbau des erfindungsgemäßen Interferometersystems der Figuren 1 und 2 werden in diesem Fall der Meßstrahl 6 und der an dem beweglichen Meßreflektor 8 reflektierte Meßstrahl 6.1 über eine Umlenkeinrichtung 11, die sich genau auf der Meßachse 30 befindet, umgelenkt, und der Referenzstrahl 7 und der reflektierte Refernzstrahl 7.1 verlaufen parallel zur Meßachse 30 geradlinig vom bzw. zum Meßkopf 2. Man kann sagen, daß die Strahlführungen von Meßstrahl 6, 6.1 und Referenzstrahl 7, 7.1 genau umgekehrt sind.

Die Umlenkeinrichtung 11 für den Meßstrahl 6, 6.1 ist auf einem Abstandshalter 27 montiert, so daß der Meßstrahl 6 exakt auf der Meßachse 30 verläuft. Außerdem ist der Referenzreflektor 12 etwas höher an der Haltevorrichtung 24 und näher in der Höhe der Meßspitze des ortsfesten Meßtasters 22 angebracht als im vorherigen Anwendungsbeispiel von Figur 2.

Durch die in Figur 3 gezeigte Strahlführung von Meßstrahl 6, 6.1 und Referenzstrahl 7, 7.1 ergibt sich eine etwa gleich lange Laufstrecke von Meßstrahl 6 + 6.1 und Refernzstrahl 7 + 7.1. Ein Vorteil dieser Konstruktion liegt darin, daß die Lichtstrahlen 6, 6.1 und 7, 7.1 aufgrund ihrer etwa gleichen Laufstrecke auch in etwa gleiche Intensitätsverluste erleiden. Dies bedeutet, daß der reflektierte Meßstrahl 6.1 und der reflektierte Referenzstrahl 7.1, die an der Rekombinationseinrichtung zu dem Interferenzstrahl 10 rekombinieren, in etwa die gleiche Lichtintensität aufweisen. Hierdurch wird das optische Interferenzsignal 10 für die Detektoreinrichtung 3 leichter und besser auswertbar, da die Interferenzmaxima und -minima während der Verschiebung des Meßreflektors 8 deutlicher unterschieden werden können. Ein weiterer Vorteil gerade der Anordnung des Strahlengangs nach Figur 3 wird darin gesehen, daß die sich bei Temperaturänderungen verlängernde oder verkürzende Referenzstrecke die Maschinendrift im Idealfall ausgleicht. Dadurch wird die Meßgenauigkeit der in dieser Weise aufgebauten Meßeinrichtung in nicht exakt temperierten Räumen wesentlich ver-bessert. Bei dieser Art der Messung mit extrem hoher Meßgenauigkeit ist jede Kleinigkeit von großer Wichtigkeit, und es ist notwendig, die externen Einflußgrößen auf das theoretische Verhalten der Meßeinrichtung bzw. das theoretische Meßergebnis so gering wie möglich zu halten.

## Patentansprüche

1. Verfahren zur optischen Messung von Längen und Entfernungen, im wesentlichen durch Erzeugen und Aussenden eines Lichtstrahles (5), Teilen des Lichtstrahles (5) in einen Meßstrahl (6) und in einen Referenzstrahl (7), Reflektieren des Meßstrahles (6) an einem Meßreflektor (8), Rekombinieren des reflektierten Meßstrahles (6.1) und des Referenzstrahles (7) zu einem Interferenzstrahl (10) und Erfassen des optischen Interferenzsignales (10) und elektronisches Auswerten des durch das optische Interferenzsignal (10) erzeugten elektrischen Signales,
dadurch gekennzeichnet,
daß der Referenzstrahl (7) an einem ortsfesten Referenzreflektor (12) reflektiert wird, und
daß der Interferenzstrahl (10) aus dem reflektierten Meßstrahl (6.1) und dem vom Referenzreflektor (12) reflektierten Referenzstrahl (7.1) gebildet wird,
wobei die Strahlführung des Referenzstrahles (7, 7.1) parallel und gleichgerichtet zur Strahlführung des Meßstrahles (6, 6.1) erfolgt.

2. Verfahren nach Anspruch 1,
dadurch gekennzeichnet,
daß die Reflexion des Referenzstrahles (7) etwa in Höhe eines Referenzpunktes (17) der Messung erfolgt.

3. Verfahren nach Anspruch 2,
dadurch gekennzeichnet,
daß der Referenzpunkt (17) durch die Nullpunktsstellung der Messung gebildet wird.

4. Verfahren nach einem der Ansprüche 1 bis 3,
dadurch gekennzeichnet,
daß die Gesamtlaufstrecke des Meßstrahles (6, 6.1) und die Gesamtlaufstrecke des Referenzstrahles (7, 7.1) gleich oder in etwa gleich lang sind.

5. Verfahren nach einem der Ansprüche 1 bis 4,
dadurch gekennzeichnet,
daß der Lichtstrahl (5) von einer Laserlichtquelle (1) erzeugt wird.

6. Vorrichtung zur Durchführung des Verfahrens zur optischen Messung von Längen und Entfernungen mit einem Laserinterferometersystem, das im wesentlichen eine Laserlichtquelle (1), einen Meßkopf (2) mit zumindest einer Sende- und Empfangseinheit, einen Strahlteiler (4) zur Teilung eines von der Laserlichtquelle (1) erzeugten Lichtstrahles (5) in einen Meßstrahl (6) und in einen Referenzstrahl (7), einen beweglich angebrachten Meßreflektor (8) zur Reflexion des Meßstrahles (6), eine Rekombinationseinrichtung (9) zur Bildung eines Interferenzstrahles (10) aus dem Referenzstrahl (7) und dem reflektierten Meßstrahl (6.1) und eine Detektoreinrichtung (3) zur Erfassung und elektronischen Auswertung des optischen Interferenzsignals (10) aufweist,
dadurch gekennzeichnet,
daß das Interferometersystem weiter einen ortsfesten Referenzreflektor (12) zur Reflexion des Referenzstrahles (7) aufweist, so daß der Interferenzstrahl (10) aus dem reflektierten Meßstrahl (6.1) und dem vom Referenzreflektor (12) reflektierten Referenzstrahl (7.1) gebildet wird, wobei die Strahlführung des Referenzstrahles (7, 7.1) parallel und gleichgerichtet zur Strahlführung des Meßstrahles (6, 6.1) erfolgt.

7. Vorrichtung nach Anspruch 6,
dadurch gekennzeichnet,
daß der Referenzreflektor (12) am oder etwa in Höhe eines Referenzpunktes (17) der Messung angebracht ist.

8. Vorrichtung nach Anspruch 6 oder 7,
dadurch gekennzeichnet,
daß eine Umlenkeinrichtung (11) für den Referenzstrahl (7, 7.1) und/oder für den Meßstrahl (6, 6.1) zur Umlenkung des Referenzstrahles (7) in eine Richtung parallel und gleichgerichtet zum Meßstrahl (6) bzw. zur Umlenkung des Meßstrahles (6) in eine Richtung parallel und gleichgerichtet zum Referenzstrahl (7) vorgesehen ist.

9. Vorrichtung nach einem der Ansprüche 6 bis 8,
dadurch gekennzeichnet,
daß der Abstand des Meßreflektors (8) zum Strahlteiler (4) gleich oder etwa gleich groß ist wie der Abstand des Referenzreflektors (12) zum Strahlteiler (4).

10. Vorrichtung nach einem der Ansprüche 6 bis 9,
dadurch gekennzeichnet,
daß der Strahlteiler (4) und/oder die Rekombinationseinrichtung (9) innerhalb oder außerhalb des Meßkopfes (2) angeordnet ist bzw. sind.

11. Vorrichtung nach einem der Ansprüche 6 bis 10,
dadurch gekennzeichnet,
daß der Strahlteiler (4) und die Rekombinationseinrichtung (9) als ein Bauteil ausgebildet sind.

12. Vorrichtung nach einem der Ansprüche 6 bis 11,
dadurch gekennzeichnet,
daß der Meßreflektor (8) und/oder der Referenzreflektor (12) als ein Triple-Prisma ausgebildet ist bzw. sind.

13. Vorrichtung nach einem der Ansprüche 6 bis 12,
dadurch gekennzeichnet,
daß der Meßkopf (2) fluchtend mit dem Meßstrahl (6, 6.1) oder seitlich, oberhalb oder unterhalb des Meßstrahles (6, 6.1) angeordnet ist.

14. Verwendung der Vorrichtung zur Durchführung des Verfahrens zur optischen Messung von Längen und Entfernungen nach einem der Patentansprüche 6 bis 13 in einer Meßeinrichtung (20), insbesondere einer Einkoordinaten-Meßeinrichtung.

15. Verwendung nach Anspruch 14,
dadurch gekennzeichnet,
daß der Referenzstrahl (7, 7.1) parallel zur Maschinenführung der Meßeinrichtung (20) orientiert ist.

16. Verwendung nach Anspruch 14 oder 15,
dadurch gekennzeichnet,
daß der Meßstrahl (6, 6.1) und/oder der Referenzstrahl (7, 7.1) abgedeckt ist bzw. sind.

17. Verwendung nach einem der Ansprüche 14 bis 16,
dadurch gekennzeichnet,
daß der Referenzreflektor (12) im Bereich zwischen einer Haltevorrichtung (24) für einen ortsfesten Meßtaster (22) und dem beweglichen Meßreflektor (8) in Ausgangsposition angebracht ist.
